# EUROPEAN PATENT SPECIFICATION

(11) **EP 3 316 661 B1**
(45) Date of publication and mention of the grant of the patent: **04.03.2020**
(21) Application number: 17152911.8
(22) Date of filing: 24.01.2017
(51) Int. Cl.: H05B 1/02, C21D 11/00, C21D 1/40, H05B 6/06, H05B 6/10

(54) **AUTOMATIC CONTROLLED ELECTRIC HEATING EQUIPMENT FOR PRODUCTION OF HIGH RESISTANCE PARTS**
AUTOMATISCH KONTROLLIERTE ELEKTRISCHE HEIZUNGSGERÄTE HERSTELLUNG VON HOCHWIDERSTANDTEILEN
ÉQUIPEMENT AUTOMATIQUE DE CHAUFFAGE ÉLECTRIQUE CONTRÔLÉ POUR LA PRODUCTION DE PIÈCES À HAUTE RÉSISTANCE

(30) Priority: 25.10.2016 BR 102016024974
(43) Date of publication of application: 02.05.2018
(73) Proprietor: Aethra Sistemas Automotivos S/A, 32660-000 MG Cidade de Betim Minas Gerais (BR)
(72) Inventor: SPORTELLI, Pietro, 32686-190 Cidade de Betim Minas Gerais (BR)
(74) Representative: Pereira da Cruz, Joao

(56) References cited:
- EP-A1- 2 236 226
- US-A1- 2016 279 731

## Description

### FIELD OF THE INVENTION

The present invention relates to the metallurgical industry, particularly to the field of auto parts, is about an automatic electric conduction heating device for the production of high mechanical strength stamped parts by tool hardening from hot stamping of the material with specific raw material, granting greater hardness and mechanical resistance to the part, which allows the creation of lighter finished products which support greater loads and impacts.

### PRIOR ART OF THE INVENTION

The production of stamped parts of high hardness from the high temperature forming process consists of heating a metal sheet (specific material) and hardening of this material, by transforming the microstructure of the metallic material to conditions of higher hardness through quick cooling of the sheet already formed into its final shape inside the tool. This requires heating the plate from room temperature to the temperature called austenitizing temperature of the material, when its microstructure will have been transformed into austenite.

In the current state of the art, the heating of this plate consists of using specific equipment for this purpose, and can be carried out in the following ways: by heating, through radiation; by burning fuel (commonly natural or LPG); by electric heating (resistors); or by heating through electric induction.

In equipment that use fuel heating, electric heating or mixed (electric + fuel) heating options of continuous furnaces, in which the part goes through a long path inside the furnace (over 10 meters in length), the part receives throughout the course the heat generated by fuel burning or by heating of electrical resistances, to progressively raise its temperature until it reaches the desired temperature at the furnace outlet. Usually these furnaces have zones with different and increasing temperatures, where the plate is exposed along the path equaling its temperature with the temperature of each zone. Stationary furnaces can also be used. In these cases the material is deposited in a high temperature chamber and the piece remains in its interior for a certain time until reaching the desired temperature when the piece is removed.

In induction heating, the heat in the part is generated through an electric current induced by a coil, in which circulates a determined electric current, placed around the part to generate an electric current in its inside consequently its heating due to this internal current. These furnaces may also be continuous or stationary, where in the continuous furnace the piece is led by a conveyor belt close to the heating coil, entering from one side at ambient temperature and leaving the other end at the desired temperature; in the stationary furnace the part is deposited in a chamber where the coils are located, and upon reaching the required temperature the piece is withdrawn from the interior.

In analyzing the existing equipment, it has been observed that in the case of continuous fuel and electric furnaces, as well as in continuous induction furnaces, there is a large consumption of space due to the length of the course required to be traveled in order to raise the temperature of the product. Space-efficient utilization inside a shed is of great value for the companies, since other productive processes can be accommodated, as well as storage, logistical improvements, etc.

Another point observed in such equipment is the heating rate, which affects the time required for heating and has a great impact on the productivity of a process. In the case of radiation heating, heating rates of approximately 6.5°C/sec can be achieved and in cases of induction heating, heating rates of 200°C/ sec can be achieved.

As well as the previously mentioned shortcomings, energy consumption from inefficiencies in the heating process may generate a high cost of production for the company, and a more efficient process is always necessary so that costs can be reduced. In the case of radiation heating, the efficiency of a continuous furnace is approximately 26% and for induction heating this value lies between 40 and 60%.

Patent document EP2236226A1 discloses an automatic controlled electric conduction heating equipment for production of high mechanical resistance parts comprising a heating controller system performing closed-loop control of heating of a part, receiving signals from a temperature sensor and acting on a power controller system; a data acquisition system; a mechanical fastening device for securing the part to be heated and carrying out electric contact of electrodes with said part comprising a support structure; thermal expansion compensator assembly; fixing cylinders and a mechanical device for fastening and closing electrodes; all connected to an electric power and a thermal expansion compensation system.

Patent document US2016279731A1 discloses a chiller including a coolant which cools the electrode, not disclosing, neither implicit or explicit, electrodes with channels or internal channels, and the only refer to cooling the electrodes is with the coolant of the chiller, and said coolant cools the circumference of the upper electrode.

### SUMMARY OF THE INVENTION

To this extent, the present invention provides a heating device in which the heating takes place by conduction (heating by Joule effect), which does not occupy an area much larger than the part to be heated, obtaining a better utilization of the area used by the production line. With this type of heating, heating rates up to 400°C/ sec may be reached, with a speed higher than twice as fast as induction heating and 61 times faster than radiation heating. Thus, with regard to the efficiency of the process, i.e. the efficiency of energy utilization to carry out the heating of the plate, heating by conduction can reach 87%, promoting a major economy in costs of transforming metal sheets.

Conduction heating, on which the equipment is based, eliminates some problems encountered in the known processes as used for this purpose in the present state of the art, promoting a better space utilization in its installation, in view of the equipment dimensions required in view of the dimensions of the metal sheet to be heated. It also provides the possibility of a faster heating in view of the rate of heating to be obtained with the application of this technology. Another point that promotes great gain in the use of this technique is its energy efficiency, since the greater percentage of the energy spent during heating is turned into real gain of temperature of the product, thus improving productive costs and reducing energy waste.

The automatic controlled electric heating equipment for the production of high-strength parts, object of this patent, may be better understood by reporting to the enclosed figures, which are part of this descriptive report and contain numerical references together with the description of their technical particularities. These figures do not restrict their configuration as to their dimensions, proportions and possible types of finishing inserted nor the scope of their practical application.

### BRIEF DESCRIPTION OF THE DRAWINGS

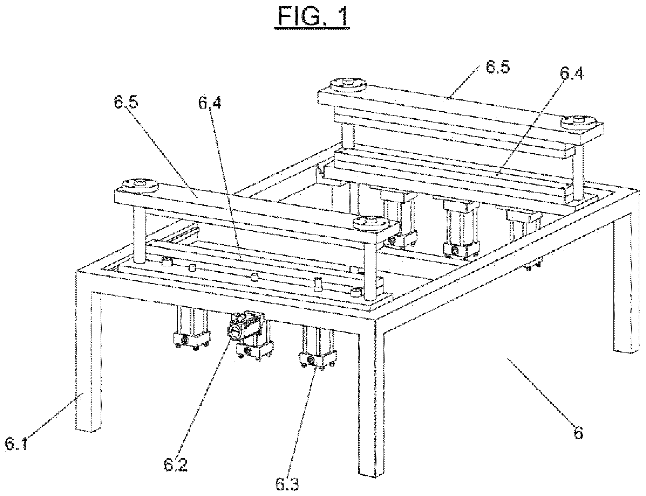

Figure 1 is an illustration, in perspective view of the device.

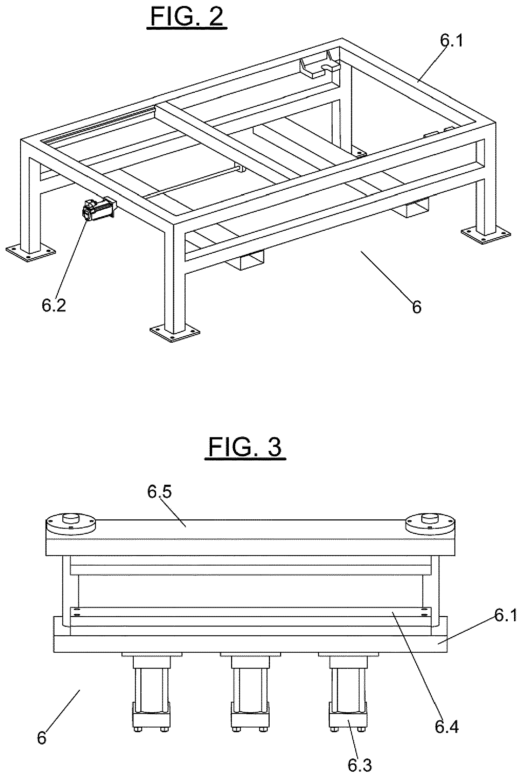

Figure 2 is an illustration, in perspective view of the equipment, showing the thermal expansion compensation system in detail.
Figure 3 is an illustration, in side view of the device, showing the arrangement of the electrodes and their mechanical structure.

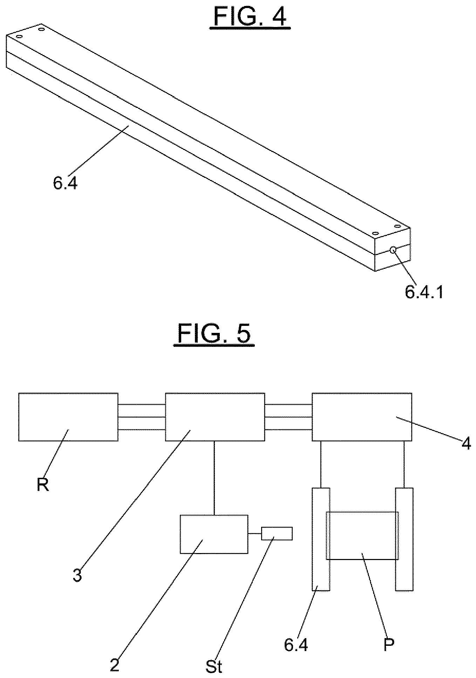

Figure 4 is an illustration, in perspective view of the electrode, showing its internal cooling duct.
Figure 5 is an electric block diagram of the equipment.

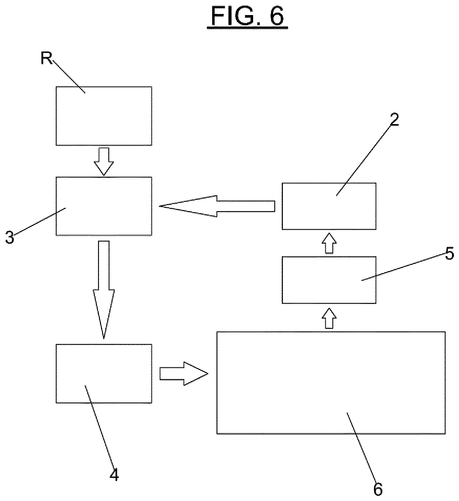

Figure 6 is a flowchart of the equipment activity.

### DESCRIPTION OF THE INVENTION

According to these figures and their numerical references, the subject of this invention relates to (1) an automatic controlled electric conduction heating device for the production of high-strength parts consisting basically of the following parts: heating controller system (2), power controller system (3), power transformer (4), data acquisition system (5), mechanical fastening device (6) of the plate and implementation of electric contact and expansion compensation system (7).

In this equipment (1) the heating controller system (2) performs closed-loop heating control of the part, receiving signals from the temperature sensor (St) (thermocouple, thermal camera, etc.) acting on the power controller (3) in order to provide the electrical power (voltage and current) required to achieve a homogeneous heating according to the specified parameters.

The power controller system (3), fed by the electrical network (R) of the installation site and upon command from of the heating controller system (2), supplies the power transformer (4) with the required power during heating, and is responsible for supplying all energy demand for heating.

The power transformer (4) converts the voltage and current values supplied by the power controller system (3) to the levels applied directly to the plate from an established transformation ratio.

The data acquisition system (5) closes the control loop by performing temperature measurements of the part, feeding said information to the heating controller system (2), so that control can be made. This heating control system (2) promotes precise and efficient temperature control and monitoring.

The mechanical device (6) for securing the plate (P) and implementation of electrical contact mechanically fixes the plate to be heated promoting the electrical contact of the electrodes with the plate (P). This device (6) contains the following movable parts for fixing the plate: support structure (6.1), thermal expansion compensator set (6.2), fixing cylinders (6.3), copper electrodes (6.4) with cooling channels (6.4.1), a mechanical device (7) for securing and closing the electrodes (6.5), which are connected to the electric power assembly formed by the power controller system (3) and the power transformer (4). All power equipment (3 and 4), including the electrodes (6.4), are cooled to avoid any heat build-up that may lead to undesired efficiency loss in the equipment.

The electrodes (6.4) used in the automatic heating equipment (1) are made of material (copper) of high electrical conductivity and good mechanical resistance in order to conduct the electrical current used in the heating in an efficient way to reduce the losses of the system, having internal cooling channels (6.4.1) for low temperature maintenance to increase energy transfer efficiency.

In practice, when a plate or part (P) is deposited in the device (1), it is in contact with the electrodes (6.4) and the fixing cylinders (6.3) are closed to promote the best contact of the electrodes (6.4) with the plate (P). With the plate (P) in position, the heating control system (2) starts the operation, sending to the power controller system (3) a reference for releasing electrical energy to the power transformer (4).

The power controller system (3) when receiving the power to be used in its power supply (grid of the installation) performs its treatment through rectification/modulation and releases the heating controller system (2) to start the heating by applying a voltage to the power transformer (4) specific for that moment of heating. The power transformer (4) performs the transformation of this received voltage and applies the transformed value on the electrodes (6.4), on which the plate (P) is positioned. The application of this voltage to the plate (P) promotes the appearance of a high electric current on its inside, generating the heating.

Upon initiation of heating, the data acquisition system (5) performs temperature measurements and sends them to the heating controller system (2), which in turn processes the information and sends commands so that the power controller system (3) can adjust the voltage/current values applied to the transformer and consequently to the plate (P) being heated.

All power equipment (3) (4), including the electrodes (6.4), are cooled through internal cooling channels (6.4.1).

During heating the plate undergoes thermal expansion due to the promoted heating, when the expansion compensation system (7) moves the electrodes (6.4) to avoid warping of the plate (P) during the process, ensuring that it is always flat.

## Claims

1. Automatic controlled electric conduction heating equipment for production of high mechanical resistance parts comprising:
a) a heating controller system (2);
b) a power controller system (3) for supplying a power transformer (4) with the energy required during heating;
c) a data acquisition system (5);
d) support structure (6.1);
e) electrodes (6.4);
f) a mechanical fastening device (6) for securing a part (P) to be heated and for carrying out electric contact of electrodes (6.4) with said part (P) comprising the following movable parts for fixing the part (P): a thermal expansion compensator assembly (6.2); fixing cylinders (6.3); and a mechanical device (7) for fastening and closing electrodes (6.5) which are connected to an electric power assembly formed by the power controller system (3) and the power transformer (4) ;
**characterized in that**
said electrodes (6.4) are copper electrodes with internal cooling channels (6.4.1) and movable by the mechanical device (7) during heating of the part (P); and
the power controller system (3), the power transformer (4) and the electrodes (6.4) are cooled through the internal cooling channels (6.4.1).

2. Automatic controlled electric heating equipment according to claim 1, wherein the power transformer (4) converts the voltage and current values supplied by the power controller system (3), for the levels applied directly on the part (P), from an established transformation ratio.

3. Automatic controlled electric heating equipment according to claim 1, wherein the data acquisition system (5) performs the closing of the control loop by performing temperature measurements of the part (P) and feeding this information to the heating controller system (2) so that control can be performed.

## Patentansprüche

1. Automatisch gesteuertes und elektrisches Leitungsheizgerät für die Herstellung von Teilen mit hoher mechanischer Widerstandsfähigkeit, das folgendes umfasst:
a) ein Heizungsreglersystem (2);
b) ein Leistungsreglersystem (3), um ein Netztransformator (4) mit der notwendigen Energie, während dem Aufheizen, zu versorgen;
c) ein Datenerfassungssystem (5);
d) eine Stützstruktur (6.1);
e) Elektroden (6.4);
f) mechanische Befestigungsvorrichtung (6), um einen Teil (P) zu befestigen, der erhitzt wird, um elekrtischen Kontakt der Elektroden (6.4) mit besagtem Teil (P) vorzunehmen, welche folgende beweglichen Teile, um das Teil (P) zu befestigen, umfasst: eine Wärmedehnungsausgleichseinheit (6.2); Fixierungszylinder (6.3); und ein mechanishes Gerät (7), um Elektroden zu befestigen und zu schließen (6.5), die zu einer elektrischen Energiebaugruppe verbunden sind, die von dem Leistungsreglersystem (3) und dem Netztransformator (4) gebildet wird;
**dadurch gekennzeichnet, dass**
die besagten Elektroden (6.4) Kupferelektroden mit inneren Kühlungskanälen (6.4.1) und bewegbar durch das mechanische Gerät (7) während Aufheizung des Teils (P) sind;
und
das Leistungsreglersystem (3), der Netztransformator (4) und die Elektroden (6.4) durch die inneren Kühlungskanälen (6.4.1) abgekühlt werden.

2. Automatisch gesteuertes und elektrisches Leitungsheizgerät nach Anspruch 1, worin der Netztransformator (4) die Spannungs- und Stromwerte, die von dem Leistungsreglersystem (3) versorgt werden, für die Nivellierungen, die direkt an dem Teil (P) angewendet werden, von einem festgelegten Übersetzungsverhältnis, umwandelt.

3. Automatisch gesteuertes und elektrisches Leitungsheizgerät nach Anspruch 1, worin das Datenerfassungssystem (5) die Schließung des Regelungskreises durchführt, indem es Temperaturmessungen des Teils (P) durchführt und diese Information an das Heizungsreglersystem (2) weitergibt, so dass die Regelung ausgeführt werden kann.

## Revendications

1. Équipement de chauffage par conduction électrique à commande automatique pour la production de pièces d'haute résistance mécanique comprenant:
a) un système de régulation de chauffage (2);
b) un système de commande de puissance (3) pour fournir à un transformateur de puissance (4) l'énergie requise pendant le chauffage;
c) un système d'acquisition de données (5);
d) une structure de support (6.1);
e) des électrodes (6.4);
f) un dispositif de fixation mécanique (6) pour la fixation d'une pièce (P) à chauffer et pour réaliser un contact électrique d'électrodes (6.4) avec ladite pièce (P), comprenant les les parties mobiles suivantes pour la fixation de la pièce (P): un ensemble compensateur de dilatation thermique (6.2); cilindres de fixation (6.3); et un dispositif mécanique (7) pour fixation et fermeture d'électrodes (6.5) qui sont connectés à un ensemble de puissance électrique formé par le système de commande de puissance (3) et le transformateur de puissance (4);
**caractérisé en ce que**
lesdites électrodes (6.4) sont des électrodes en cuivre avec canaux de refroidissement internes (6.4.1) et déplaçables par le dispositif mécanique (7) pendant l'échauffement de la pièce (P) ;
et
le système de commande de puissance (3), le transformateur de puissance (4) et les électrodes (6.4) sont refroidies par les canaux de refroidissement internes (6.4.1).

2. Équipement de chauffage électrique à commande automatique selon la revendication 1, dans lequel le transformateur de puissance (4) convertit les valeurs de tension et de courant fournies par le système de commande de puissance (3), pour les niveaux appliqués directement sur la pièce (P), à partir d'un rapport de transformation établi.

3. Équipement de chauffage électrique à commande automatique selon la revendication 1, dans lequel le système d'acquisition de données (5) effectue la fermeture de la boucle de régulation en effectuant des mesures de température de la pièce (P) et en fournissant cette information au système de régulation de chauffage (2), de sorte que un contrôle peut être effectué.
